# EUROPEAN PATENT APPLICATION

(11) **EP 2 857 196 A1**
(43) Date of publication of application: **08.04.2015**
(21) Application number: 13796934.1
(22) Date of filing: 30.05.2013
(51) Int. Cl.: B32B 27/30, B32B 27/00

(54) **FUNCTIONAL FILM AND METHOD FOR PRODUCING FUNCTIONAL FILM**

(30) Priority: 01.06.2012 JP 2012125552
(71) Applicant: Konica Minolta, Inc., Tokyo 100-7015 (JP)
(72) Inventor: KONUMA, Taro, Tokyo 100-7015 (JP); KUMAGAI, Takenori, Tokyo 100-7015 (JP)
(74) Representative: Gille Hrabal
(86) International application number: PCT/JP2013/064981
(87) International publication number: WO 2013/180202

(57) **Abstract**

In a case where a functional film that includes an acrylic layer 7, an intermediate layer 8, and a protection layer 9 adjacent to one another on a resin substrate 3, and has the protection layer 9 on its outermost surface is manufactured, the protection layer 9 contains at least a polysiloxane compound, and the intermediate layer 8 contains at least one of the following materials: polyvinyl alcohol resin, polyvinyl acetate, cellulose, and water glass. With this structure, interlayer coupling between the acrylic layer 7 and the intermediate layer 8, and interlayer coupling between the intermediate layer 8 and the protection layer 9 can be strengthened, and detachment of each of the acrylic layer 7, the intermediate layer 8, and the protection layer 9 can be reduced. Accordingly, a functional film that is highly resistant to damage can be obtained.

## Description

### Technical Field

The present invention relates to a functional film and a method of manufacturing a functional film.

### Background Art

There are various kinds of functional films for various purposes of use, and known examples of such functional films are reflection films, heat shielding films, antifouling films, and protection films.

As there has been a demand for various high-value added functional films in recent years, various kinds of functional layers are stacked on a film-type resin substrate to manufacture a functional film that has functions to serve many purposes of use.

Since these functional films are often attached to the surfaces of commercial goods, there is a particularly strong demand for functional films that are highly resistant to damage.

When a functional film is used outdoors, dust, sand, organic matter, and the like adhere to its surface, and the optical functionality of the functional film becomes lower. Furthermore, to remove such extraneous matter, the functional film is washed with distilled water and is scrubbed with a plastic or natural polymeric brush. As a result, the surface of the functional film is damaged, and the optical functionality becomes lower.

There is a known reflection film in which a reflective silver layer as a functional layer is coated with a polyester film layer or an acrylic film layer, for example (see Patent Literature 1).

There is also a known functional film in which a protection layer that has excellent weatherability is formed on the outermost surface of the film (see Patent Literatures 2 and 3).

### Citation List

### Patent Literatures

Patent Literature 1: JP 2009-520174 W
Patent Literature 2: US 7,507,776
Patent Literature 3: JP 2010-106061 A

### Summary of Invention

### Technical Problem

In the case of Patent Literature 1, however, the outermost surface of the film is an acrylic film layer that does not have a sufficiently high degree of hardness. Therefore, when the acrylic film layer is damaged, the reflectance of the reflection film becomes lower.

In the cases of Patent Literatures 2 and 3, the protection layer is formed by applying an acrylic resin material onto a polyester substrate. Therefore, when the hardness of the protection layer becomes lower, damage to the protection layer becomes noticeably larger.

The present invention has been made in view of the above problems, and aims to provide a functional film that is highly resistant to damage, and a method of manufacturing the functional film.

### Solution to Problem

To solve the above problems, the invention disclosed in claim 1 is
a functional film characterized by including an acrylic layer, an intermediate layer, and a protection layer in this order on a resin substrate, the acrylic layer, the intermediate layer, the protection layer being adjacent to one another, the protection layer being located on the outermost surface,
the protection layer containing at least a polysiloxane compound,
the intermediate layer containing at least one of polyvinyl alcohol resin, polyvinyl acetate, cellulose, and water glass.

The invention disclosed in claim 2 is the functional film of claim 1 characterized in that
the intermediate layer contains polyisocyanate.

The invention disclosed in claim 3 is the functional film of claim 1 or 2, characterized in that
the intermediate layer contains conductive fine particles.

The invention disclosed in claim 4 is the functional film of any one of claims 1 to 3, characterized in that
the functional film is a film mirror for solar power generation, the film mirror including a reflection layer having a thickness not smaller than 30 nm and not greater than 200 nm.

The invention disclosed in claim 5 is the functional film of any one of claims 1 to 3, characterized in that
the functional film is a heat shielding film including a reflection layer having a thickness not smaller than 0.1 nm and not greater than 50 nm.

The invention disclosed in claim 6 is a method of manufacturing a functional film including an acrylic layer, an intermediate layer, and a protection layer on a resin substrate,
the method characterized by including the steps of:
forming the acrylic layer on the upper surface side of the resin substrate;
performing a corona treatment on the upper surface of the acrylic layer;
forming the intermediate layer on the acrylic layer, the intermediate layer containing at least one of polyvinyl alcohol resin, polyvinyl acetate, cellulose, and water glass; and
forming the protection layer on the intermediate layer, the protection layer containing at least a polysiloxane compound.

The invention disclosed in claim 7 is the functional film manufacturing method of claim 6, characterized by further including the step of
performing a heat treatment to cause interlayer coupling between the acrylic layer and the intermediate layer, and/or interlayer coupling between the intermediate layer and the protection layer.

### Advantageous Effects of Invention

The present invention can provide a functional film that is highly resistant to damage, and a method of manufacturing the functional film.

### Brief Description of Drawings

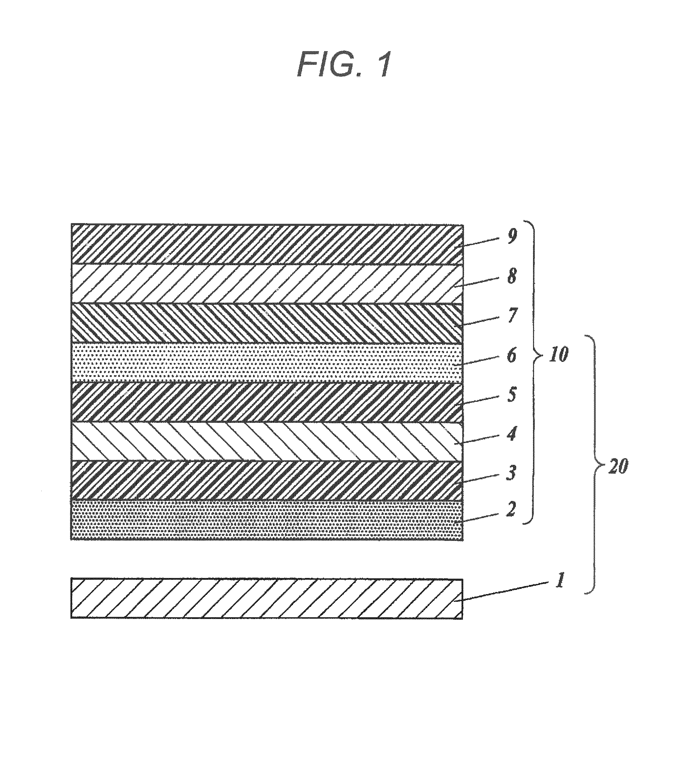

Fig. 1 is a diagram for explaining an example structure of a film mirror of the present invention.

### Description of Embodiments

The following is a description of preferred embodiments for carrying out the present invention, with reference to the drawings. Various technically preferred limitations for carrying out the present invention are put on the embodiments described below, but the scope of the invention is not limited to the embodiments described below and examples shown in the drawings.

As a result of intensive studies, the inventors have found that, when a functional film that includes an acrylic layer, an intermediate layer, and a protection layer adjacent to one another on a resin substrate, and has the protection layer on its outermost surface is manufactured, the protection layer should contain at least a polysiloxane compound, and the intermediate layer should contain at least one of the following materials: polyvinyl alcohol resin, polyvinyl acetate, cellulose, and water glass. With this structure, interlayer coupling between the acrylic layer and the intermediate layer, and interlayer coupling between the intermediate layer and the protection layer can be strengthened, and detachment of each of the acrylic layer, the intermediate layer, and the protection layer can be reduced. Accordingly, a functional film that is highly resistant to damage can be obtained. In the present invention, "layers being adjacent to each other" means that a layer exists in the vicinity of another layer. Such two layers may be in contact with each other, or may have one or more other layers in between, without adversely affecting the effects of the present invention.

An acrylic layer is normally used to protect the functional layers in a functional film or protect the functional film. Since the acrylic layer does not have a sufficiently high degree of hardness, there are cases where a protection layer is further formed on the acrylic layer so as to increase resistance to damage. However, adhesion between the acrylic layer and the protection layer is weak, and, in some cases, the protection layer is detached from the acrylic layer when the functional film is used over a long period of time. In such cases, the resistance of the functional film to damage cannot be maintained.

In view of this, interlayer coupling between the acrylic layer and the intermediate layer, and interlayer coupling between the intermediate layer and the protection layer are strengthened, to increase the adhesion among the respective layers and reduce detachment of each of the layers. In this manner, the resistance of the functional film to damage is maintained at a high level. Thus, a functional film that is highly resistant to damage can be realized.

### (1) Outline of the structure of a film mirror for solar power generation

The outline of a film mirror for solar power generation is now described as an example of a functional film according to the present invention.

As shown in Fig. 1, a film mirror 10 includes a reflection layer (a reflective silver layer) 4 as a functional layer on a resin substrate 3, and an acrylic layer 7, an intermediate layer 8, and a protection layer 9 that coat the reflection layer 4. A protection layer is a hard coating layer that is placed on the outermost surface of a film mirror, and increases resistance to damage.

In this film mirror 10, the protection layer 9 contains at least a polysiloxane compound, and the intermediate layer 8 contains at least one of the following materials: polyvinyl alcohol resin, polyvinyl acetate, cellulose, and water glass. With this arrangement, the interlayer coupling between the acrylic layer 7 and the intermediate layer 8, and the interlayer coupling between the intermediate layer 8 and the protection layer 9 are characteristically strengthened.

An anchor layer may be provided between the resin substrate 3 and the reflection layer 4.

An ultraviolet absorption layer may be provided on the light incidence side of the reflection layer 4.

It is also a preferred mode in which an anticorrosion layer 5 is provided on the light incidence side of the reflection layer 4.

It is also a preferred mode in which a bonding layer 6 is provided on the anticorrosion layer 5.

It is also a preferred mode in which an adhesive layer 2 is provided on the surface on the opposite side of the resin substrate 3 from the light incidence side.

In terms of mirror bending prevention, regular reflectance, usability, and the like, the thickness of the entire film mirror is preferably 75 to 250 µm, or more preferably, 90 to 230 µm, or even more preferably, 100 to 220 µm.

The respective layers will be described below in detail.

### (2) Resin substrate

As the resin substrate, any of various known resin films can be used. Examples of such resin films include cellulose ester-based films, a polyester-based films, polycarbonate-based films, polyarylate-based films, polysulfone (polyethersulfone)-based films, polyester films such as polyethylene terephthalate and polyethylene naphthalate, polyethylene films, polypropylene films, cellophane, cellulose diacetate films, cellulose triacetate films, cellulose acetate propionate films, cellulose acetate butyrate films, polyvinylidene chloride films, polyvinyl alcohol films, ethylene vinyl alcohol films, syndiotactic polystyrene-based films, polycarbonate films, norbornene-based resin films, polymethylpentene films, polyether ketone films, polyether ketone imide films, polyamide films, fluororesin films, nylon films, polymethyl methacrylate films, acrylic films, and the like. Of these films, polycarbonate-based films, polyester-based films such as polyethylene terephthalate, norbornene-based resin films, cellulose ester-based films, and acrylic films are preferable. Particularly, it is preferable to use a polyester-based film such as polyethylene terephthalate or an acrylic film. The resin film may be a film manufactured with a melt cast film, or may be a film manufactured with a solution cast film.

Since the resin substrate is located further away from the light incidence side than the reflection layer is, ultraviolet rays do not easily reach the resin substrate. Particularly, it becomes more difficult for ultraviolet rays to reach the resin substrate, as the layers that are located closer to the light incidence side than the resin substrate is contain an ultraviolet absorber, or an ultraviolet absorption layer is provided. In that case, even a resin that is easily degraded by ultraviolet rays can be used as the resin equipment. In view of this, a polyester film such as polyethylene terephthalate can be used as the resin substrate.

The thickness of the resin substrate is preferably adjusted in accordance with the type of resin and the purpose of use. For example, the thickness of the resin substrate is normally in the range of 10 µm to 300 µm. More preferably, the thickness of the resin substrate is 20 to 200 µm. Even more preferably, the thickness of the resin substrate is 30 to 100 µm.

### (3) Anchor layer

The anchor layer is made of resin, and bonds the resin substrate and the reflection layer to each other. Therefore, the anchor layer needs to have the adhesiveness for bonding the resin substrate and the reflection layer to each other, heat resistance for resisting heat when the reflection layer (the reflective silver layer) is formed by a vapor deposition method or the like, and the smoothness for extracting the high reflective performance the reflection layer is originally capable of.

The resin material used as the anchor layer is not particularly limited, as long as the conditions related to the above mentioned adhesiveness, heat resistance, and smoothness are satisfied. It is possible to use one or a combination of the following resins: a polyester resin, an acrylic resin, a melamine resin, an epoxy resin, a polyamide resin, a vinyl chloride resin, a vinyl chloride-vinyl acetate copolymer resin, or the like. In terms of weatherability, a mixed resin of a polyester resin and a melamine resin is preferable, and a thermosetting resin containing a hardener such as isocyanate is more preferable.

The anchor layer can be formed by using a known coating method of applying a predetermined resin material, such as a gravure coating method, a reverse coating method, or a die coating method.

The thickness of the anchor layer is preferably 0.01 to 3 µm, or more preferably, 0.1 to 1 µm. If the thickness of the anchor layer is smaller than 0.01 µm, the adhesiveness will become poorer, and any advantageous effect of the formation of the anchor layer will not be achieved. Furthermore, the concavities and convexities in the surface of the resin substrate are not easily hidden, and the smoothness becomes poorer, resulting in lower reflectance of the reflection layer, which is not preferable. If the thickness of the anchor layer is greater than 3 µm, the adhesiveness cannot be expected to increase, and the smoothness will become poorer due to uneven coating, resulting in insufficient hardening of the anchor layer, which is not preferable, either.

### (4) Reflection layer

The reflection layer is a layer that has a function to reflect sunlight, and is made of a metal or the like.

The surface reflectance of the reflection layer is preferably 80% or higher, or more preferably, 90% or higher. The reflection layer is preferably made of a material containing an element selected from the element group consisting of Al, Ag, Cr, Cu, Ni, Ti, Mg, Rh, Pt, and Au.

In view of reflectance, Al or Ag is particularly preferable as the principal component, and two or more thin films of such a metal may be formed.

In the present invention, a reflective silver layer containing silver as the principal component is preferably used as the reflection layer.

In terms of reflectance and the like, the thickness of the reflection layer (the reflective silver layer) is preferably 10 to 200 nm, or more preferably, 30 to 150 nm.

The reflection layer can be formed by using either a wet process or a dry process. A wet process is a general term for plating, and is a process of forming a film by precipitating a metal from a solution. A specific example of a wet process is a silver mirror reaction or the like. Meanwhile, a dry process is a general term for vacuum film deposition, and specific examples of dry processes include a resistance heating vacuum vapor deposition method, an electronic beam heating vacuum vapor deposition method, an ion plating method, an ion beam assisted vacuum vapor deposition method, a sputtering method, and the like. In the present invention, a vapor deposition method compatible with a roll-to-roll process for continuously forming films is preferably used. For example, in manufacturing a film mirror for solar power generation, a method of forming a reflective silver layer through silver deposition is preferably used.

Where the thickness of the reflection layer is not smaller than 30 nm and not greater than 200 nm as described above, for example, the functional film including the reflection layer can be used.as a film mirror for solar power generation.

Where the thickness of the reflection layer is not smaller than 0.1 nm and not greater than 50 nm, for example, the functional film including the reflection layer can be used as a heat shielding film.

### (5) Acrylic layer

The acrylic layer is located closer to the light incidence side than the resin substrate is, and is more easily affected by ultraviolet rays. Therefore, it is preferable to use an acrylic resin material that is resistant to ultraviolet radiation and contains an ultraviolet absorber. Also, located closer to the light incidence side than the reflection layer is, the acrylic layer is preferably made of a material having optical transparency.

In a case where an acrylic resin film is used as the acrylic layer, the acrylic layer is placed above the resin substrate by bonding the acrylic resin film onto the upper surface of the reflection layer or the like via the bonding layer.

The acrylic layer can be formed by a coating method, for example. In a case where the coating film to be the acrylic layer is formed by a coating method, it is possible to use various coating methods used in conventional cases, such as spray coating, spin coating, and bar coating.

This acrylic layer preferably contains methacrylic resin as its principal component. The methacrylic resin may be a polymer containing methacrylate as its principal component, a homopolymer of methacrylate, or a copolymer of 50 wt% or more of methacrylate and 50 wt% or less of another monomer. Here, alkyl methacrylate is normally used as the methacrylate. A particularly preferred methacrylic resin is polymethyl methacrylate (PMMA).

An acrylic resin film that can be used as the acrylic resin has a transmittance of 80% or higher. Examples of such acrylic resin films include Korad Transparent Films '05005 (Polymer Extruded Products), ACRYPLEN HBS006, ACRYPLEN HBXN47, and ACRYPLEN HBS010 (Mitsubishi Rayon Co., Ltd.), SUMIPEX TECHNOLLOY S001G, SUMIPEX TECHNOLLOY S014G, and TECHNOLLOY S001GM (Sumitomo Chemical Co., Ltd.), Panlite film PC-2151 (Teijin Chemicals Ltd.), and the like. Particularly, films having a transmittance of 90% or higher are preferable. So as to provide light resistance, an ultraviolet absorber, an antioxidant, or the like may be added to the film. The thickness of any of those acrylic films is preferably 30 to 200 µm, or more preferably, 50 to 125 µm.

Here, a surface modification method for the polymer film may be a method of improving coating properties and adhesiveness by giving hydrophilic properties to the surface through a discharge treatment such as a plasma discharge treatment or a corona discharge treatment, a flame treatment, or the like. Among these treatments, the plasma discharge treatment and the corona discharge treatment are high in processing speed and achieve great effects. Accordingly, the plasma discharge treatment and the corona discharge treatment are industrially useful, and are widely used.

In the present invention, the surface of the acrylic layer is preferably subjected to a corona treatment. The mean field strength calculated by dividing the voltage applied in corona discharge by the distance between electrodes is preferably set to 1 to 50 kV/cm, or more preferably, to 1 to 20 kV/cm. If the mean field strength is less than 1 kV/cm, effective corona discharge will not easily occur, and the advantageous effects of the surface treatment will become smaller. If the mean field strength exceeds 50 kV/cm, electrostatic hazards, such as blocking and sparking, will occur more easily.

### (6) Intermediate layer.

The intermediate layer is the film that increases the adhesiveness between the acrylic layer and the protection layer.

The intermediate layer contains at least one of the following materials: polyvinyl alcohol resin, polyvinyl acetate, cellulose, and water glass. Polyvinyl alcohol resin, polyvinyl acetate, cellulose, and water glass have hydroxyl groups (OH groups) as reactive groups.

The intermediate layer can be formed by a coating method, for example. In a case where the coating film to be the intermediate layer is formed by a coating method, it is possible to use various coating methods used in conventional cases, such as spray coating, spin coating, and bar coating. For example, the intermediate layer can be formed by coating the acrylic layer with a solution containing at least one of the following materials: polyvinyl alcohol resin, polyvinyl acetate, cellulose, and water glass.

The thickness of the intermediate layer is preferably 0.1 to 5 µm, or more preferably, 0.1 to 1 µm.

As the intermediate layer contains at least one of polyvinyl alcohol resin, polyvinyl acetate, cellulose, and water glass, the reactive groups (such as the OH groups or COOH groups) in the surface of the acrylic layer bind chemically to those materials, and the polysiloxane compound in the protection layer binds chemically to those materials, so that the interlayer coupling between the intermediate layer and the acrylic layer, and the interlayer coupling between the intermediate layer and the protection layer become stronger. As a result, the adhesiveness between the acrylic layer and the protection layer via the intermediate layer increases. The cellulose the intermediate layer can contain is preferably a water-soluble cellulose. More preferably, 0.1 g or more of the cellulose can be dissolved in 100 g of water at 25°C.

The intermediately layer also preferably contains a polyisocyanate. Particularly, in a case where polyvinyl alcohol resin and water-soluble cellulose are used, a water-dispersible polyisocyanate is preferable.

Examples of polyisocianates include aromatic diisocyanates, aromatic aliphatic diisocyanates, aliphatic diisocyanates, alicyclic diisocyanates, and derivatives and modified materials of those diisocyanates.

Examples of aromatic diisocyanates include m-phenylene diisocyanate, p-phenylene diisocyanate, 4,4'-diphenyl diisocyanate, 1,5-naphthalene diisocyanate, 4,4'-diphenyl methane diisocyanate, 2,4- or 2,6-tolylene diisocyanate, 4,4'-toluidine diisocyanate, 4,4'-diphenyl ether diisocyanate, and the like.

Examples of aromatic aliphatic diisocyanates include 1,3- or 1,4-xylylene diisocyanates and mixtures of them.

Examples aliphatic diisocyanates include trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethyl hexamethylene diisocyanate, 2,6-diisocyanatomethylcaproate, and the like.

Examples of alicyclic diisocyanates include 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (isophorone diisocyanate), 4,4'-methylenebis(cyclohexyl isocyanate), methyl-2,4-cyclohexane diisocyanate, methyl-2,6-cyclohexane diisocyanate, 1,4-bis(isocyanatomethyl)cyclohexane, 1,3-bis(isocyanatomethyl)cyclohexane, 2,5(2,6)-bis(isocyanatomethyl)bicyclo[2.2.1]heptane, and the like.

Examples of derivatives of diisocyanates include dimers, trimers, biurets, allophanates, carbodiimides, uretediones, oxadiazine triones, polymethylene polyphenyl polyisocyanates (crude MDIs or polymeric MDIs), crude TDIs, and the like of the above mentioned diisocyanates. Examples of derivatives of diisocyanates also include trimethylolpropane adducts, isocyanurates, and the like of the above mentioned diisocyanates.

Modified materials of diisocyanates include modified polyol materials formed by causing reactions between polyol and the above mentioned polyisocyanates and derivatives of the polyisocyanates at such an equivalent ratio that the amount of the isocyanate groups becomes larger than the amount of the hydroxyl groups of polyol, and the like.

One of those polyisocyanates may be used independently, or a combination or two or more of those polyisocyanates may be used.

In terms of side reactions with water and weatherability of resin, it is preferable to use an aliphatic diisocyanate such as hexamethylene diisocyanate, or an alicyclic diisocyanate such as 1,3-bis(isocyanatomethyl)cyclohexane or 4,4'-methylenebis(cyclohexyl isocyanate), out of the above polyisocyanates.

It is also preferable to use a hydrophilic polyisocyanate formed by causing a partial reaction between one of the above polyisocyanates with a hydrophilic polyether, or a compound further containing anionic groups.

More preferable examples of polyisocyanates that can be contained in the intermediate layer include water-dispersible polyisocyanates, water-dispersible blocked polyisocyanates, and the like.

Examples of water-dispersible polyisocyanates include those formed by dispersing a polyisocyanate provided with hydrophilic properties from a polyethylene oxide chain in water that contains an anionic dispersant or a nonionic dispersant, and the like.

The following examples of water-dispersible polyisocyanates are commercially available and easy to come by: (trade names) Aquanate 100, Aquanate 110, Aquanate 200, Aquanate 210, and the like, manufactured by Nippon Polyurethane Industry Co., Ltd.; (trade names) Bayhydur TPLS-2032, SUB-isocyanate L801, and the like, manufactured by Sumika Bayer Urethane Co., Ltd.; (trade names) Takenate WD-720, Takenate WD-725, Takenate WD-220, and the like, manufactured by Mitsui Chemicals, Inc.; (trade names) Resamine D-56 and the like, manufactured by Dainichiseika Color & Chemicals Mfg. Co., Ltd.; and (trade names) Burnock DNW-5500, DNW-6000, and the like, manufactured by DIC Corporation.

Water-dispersible blocked polyisocyanates are formed by blocking the isocyanate groups of water-dispersible polyisocyanates with a blocking agent. Examples of blocking agents include diethyl malonate, ethyl acetoacetate, ε-caprolactam, butanone oxime, cyclohexanone oxime, 1,2,4-triazole, dimethyl-1,2,4-triazole, 3,5-dimethylpyrazole, imidazole, and the like. However, the present invention is not limited to those examples. One of those blocking agents may be used independently, or a combination of two or more of those blocking agents may be used. Of those blocking agents, ones that are cleaved at 160°C or lower, or more preferably at 150°C or lower, are preferable. Examples of such blocking agents include butanone oxime, cyclohexanone oxime, 3,5-dimethylpyrazole, and the like. Of those blocking agents, butanone oxime is particularly preferable.

The following examples of water-dispersible blocked polyisocyanates are commercially available and easy to come by: (trade names) Takenate WB-720, Takenate WB-730, Takenate WB-920, and the like, manufactured by Mitsui Takeda Chemical Co., Ltd.; and (trade names) Bayhydur BL116, Bayhydur BL5140, Bayhydur BL5235, Bayhydur TPLS2186, Desmodur VPLS2310, and the like, manufactured by Sumika Bayer Urethane Co., Ltd.

As the intermediate layer contains a polyisocyanate, the interlayer coupling between the intermediate layer and the acrylic layer, and the interlayer coupling between the intermediate layer and the protection layer are further strengthened.

The intermediate layer also preferably contains conductive fine particles.

Containing conductive fine particles, the intermediate layer can also serve as an antistatic layer.

A material having conductive properties of 10⁷ Ω·cm or lower is used as the conductive fine particles. Examples of such conductive fine particles include metal particles (such as copper particles, silver particles, copper-silver alloy particles, particles of metals other than copper and silver), metal oxides (such as ATO, ITO, Sb₂O₅, TiO₂, ZnO₂, Ce₂O₃, zinc antimonite, aluminum-doped zinc oxide, and gallium-doped zinc oxide), carbon compounds (such as carbon black, graphite, and carbon fiber), and conductive polymers (such as polyolefin, polyaniline, and polythiophene).

The amount of the conductive fine particles to be added is 10 to 80 wt%, or more preferably, 10 to 30 wt%, relative to the intermediate layer.

The particle size of the conductive fine particles is 10 to 300 nm, or more preferably, 30 to 200 nm, or even more preferably, 30 to 100 nm.

The intermediate layer may be formed with a single layer, or may be formed with more than one layer.

### (7) Protection layer

The protection layer is a layer (a hard coating layer) formed as the outermost layer of the film mirror.

If the thickness of the protection layer is too large, there is a risk of being broken by stress. If the thickness of the protection layer is too small, hardness is not maintained. Therefore, the thickness of the protection layer is preferably not smaller than 0.5 µm and not greater than 10 µm, or more preferably, not smaller than 1 µm and not greater than 5 µm.

Particularly, the protection layer in the present invention preferably has weatherability, resistance to damage, and antifouling properties. As for the resistance to damage, the pencil hardness of the surface of the protection layer is H to 6H, and the surface of the protection layer preferably has 30 scratches or less after a steel wool abrasion test with a weight of 500 g/cm². As for the antifouling properties, the falling angle of the protection layer is preferably larger than 0 degrees but not larger than 30 degrees, so as to keep excellent antifouling properties to let water droplets easily fall off.

This protection layer contains at least a polysiloxane compound. Preferably, the polysiloxane compound is an alkyltrialkoxysilane hydrolyzate, or is a mixture of a methyltrialkoxysilane hydrolyzate and a polymethylsiloxane oligomer.

A polysiloxane compound is resistant to heat, ultraviolet rays, and moisture, and excels in weatherability. Accordingly, a polysiloxane compound is an ideal protecting material in a functional film (a film mirror) to be used outdoors. Particularly, the use of a mixture of a methyltrialkoxysilane hydrolyzate and a polymethylsiloxane oligomer can provide antifouling properties, and increases the antifouling properties of the protection layer.

A polyorganosiloxane resin material that is a polysiloxane compound that can be used in the protection layer has a basic skeleton represented by the following general expression (1):

RₘSi(OR')ₙ (1)

In the above expression (1), R and R' represents alkyl groups with a carbon number 1 to 10, and m and n are integers that satisfies m + n = 4.

Specific examples of polyorganosiloxane resin materials include tetramethoxysilane, tetraethoxysilane, tetra-iso-propoxysilane, tetra-n-poropoxysilane, tetra-n-butoxysilane, tetra-sec-butoxysilane, tetra-tert-butoxysilane, terorapentaethoxysilane, tetrapenta-iso-propoxysilane, tetrapenta-n-propoxysilane, tetrapenta-n-butoxysilane, tetrapenta-sec-butoxysilane, tetrapenta-tert-butoxysilane, methyltriethoxysilane, methyltripropoxysilane, methyltributoxysilane, dimethyldimethoxysilane, dimethyldiethoxysilane, dimethylethoxysilane, dimethylmethoxysilane, dimethylpropoxysilane, dimethylbutoxysilane, dimethyldimethoxysilane, dimethyldiethoxysilane, hexyltrimethoxysilane, and the like. It is also possible to use γ-(2-aminoethyl)aminopropyltrimethoxysilane, γ-(2-aminoethyl)aminopropylmethyldimethoxysilane, β-(3,4-epoxycyclohexyl)ethyltrimethoxysilane, N-β-(N-aminobenzylaminoethyl)-γ-aminopropylmethoxysilane hydrochloride, γ-glycidoxypropyltrimethoxysilane, aminosilane, methylmethoxysilane, vinyltriacetoxysilane, γ-mercaptopropyltrimethoxysilane, γ-chloropropyltrimethoxysilane, hexamethyldisilazane, vinyltris(β-methoxyethoxy)silane, or octadecyldimethyl[3-(trimethoxysilyl)propyl]ammonium chloride. Films formed by substituting these hydrolyzable groups such as methoxy groups and ethoxy groups with hydroxyl groups are generally called polyorganosiloxane hard coats.

### (7-1) Formation of the protection layer

The above described resin material is applied onto the intermediate layer formed above the resin substrate, and is heated and hardened. A dehydrating condensation reaction progresses to cause hardening and cross linkage. As a result, the protection layer is formed.

The coating film to be the protection layer can be formed by a coating method such as wire bar coating, spin coating, or dip coating. The coating film can also be formed with a constant coating applicator, such as a die coater, a gravure coater, or a comma coater.

The amount of the coating liquid for the protection layer to be applied onto the intermediate layer is preferably not smaller than 1 g/m² and not larger than 17 g/m².

After the solvent is removed from the coating film formed by applying the coating liquid for the protection layer onto the intermediate layer, and the coating film is dried, it is preferable to perform a heat treatment so as to facilitate hardening and cross linkage of the protection layer. In the heat treatment, heat is applied to the coating film in the form of a film roll or a cut sheet at 30 to 150°C for 30 minutes to several days. In terms of the heat resistance of the resin substrate, the heat treatment is preferably performed at 40 to 80°C for four hours or longer.

As such a heat treatment is performed, the interlayer coupling between the acrylic layer and the intermediate layer, and the interlayer coupling between the intermediate layer and the protection layer can be strengthened.

In the present invention, the acrylic layer, the intermediate layer, and the protection layer are stacked in this order, so that the intermediate layer coupled to both the acrylic layer and the protection layer can be interposed between the acrylic layer and the protection layer. In this manner, the adhesiveness of the protection layer to the acrylic layer is increased.

In conventional cases, the adhesion between the protection layer made from a polysiloxane compound and the acrylic layer is weak, and the protection layer is detached from the acrylic layer when the functional film (film mirror) is used over a long period of time.

In view of this, the intermediate layer is interposed between the protection layer and the acrylic layer in the present invention, so that the adhesion between the protection layer and the acrylic layer can be increased, and the protection layer is not easily detached from the acrylic layer. As a result, the weatherability and the damage resistance of the functional film (film mirror) can be improved.

### (7-2) Ultraviolet absorber

The protection layer preferably contains an ultraviolet absorber.

Examples of organic ultraviolet absorbers include benzophenone-based ultraviolet absorbers, benzotriazole-based ultraviolet absorbers, phenyl salicylate-based ultraviolet absorbers, triazine-based ultraviolet absorbers, and the like (refer to the later description of the ultraviolet absorption layer).

Examples of inorganic ultraviolet absorbers include particles of metal oxides such as titanium oxide, zinc oxide, cerium oxide, and iron oxide.

Specifically, the protection layer preferably contains an ultraviolet absorber that has its absorption maximum wavelength in the range of 250 nm to 300 nm. The protection layer containing such an ultraviolet absorber can reduce degradation of the interface with the intermediate layer, and maintain the adhesion between the protection layer and the intermediate layer over a long period of time. Thus, the durability of the protection layer can be increased.

### (8) Anticorrosion layer

The anticorrosion layer is a layer that prevents corrosion of silver, for example. Therefore, the anticorrosion layer is preferably adjacent to the reflective silver layer. More preferably, the anticorrosion layer is adjacent to the light incidence side of the reflective silver layer. Anticorrosion layers may be provided on both sides of the reflective silver layer.

The anticorrosion layer contains a corrosion inhibitor, and more particularly, contains a corrosion inhibitor for the silver contained in the reflective silver layer. The corrosion inhibitor preferably contains groups that exhibit absorptive properties for silver. Here, "corrosion" means a phenomenon in which a metal (silver) is chemically or electrochemically corroded or is materially degraded due to an environmental material surrounding the metal (silver) (see JIS Z0103-2004).

The anticorrosion layer can use a resin as a binder. Examples of resins that can be used include cellulose ester resins, polyester resins, polycarbonate resins, polyarylate resins, polysulfone (or polyethersulfone) resins, polyesters such as polyethylene terephthalate and polyethylene naphthalate, polyethylene, polypropylene, cellophane, cellulose diacetate, cellulose triacetate, cellulose acetate propionate, cellulose acetate butyrate, polyvinylidene chloride, polyvinyl alcohol, ethylene vinyl alcohol, syndiotactic polystyrene resins, polycarbonate, norbornene resins, polymethylpentene, polyether ketone, polyether ketone imide, polyamide, fluororesins, nylon, polymethyl methacrylate, acrylic resins, and the like. Of these resins, acrylic resins are particularly preferable. The thickness of the anticorrosion layer is preferably not smaller than 30 nm and not greater than 1 µm.

The optimum content of the corrosion inhibiter varies with the compound to be used, but is preferably within the range of 0.1 to 1.0 g/m².

### (8-1) Corrosion inhibitor

Next, the corrosion inhibitor is described in detail.

The corrosion inhibitor having absorptive properties for silver is preferably one or a mixture of materials selected from amines and derivatives of amines, compounds having pyrrole rings, compounds having triazole rings, compounds having pyrazole rings, compounds having thiazole rings, compounds having imidazole rings, compounds having indazole ring, copper chelate compounds, thioureas, compounds having mercapto groups, and naphthalenes. It is also possible to use a silicon modified resin. The silicon modified resin is not particularly limited.

Examples of amines and derivatives of amines include ethylamine, laurylamine, tri-n-butylamine, O-toluidine, diphenylamine, ethylenediamine, diethylenetriamine, triethylenetetramine, tetraethylenepentamine, monoethanolamine, diethanolamine, triethanolamine, 2N-dimethylethanolamine, 2-amino-2-methyl-1,3-propanediol, acetamide, acrylamide, benzamide, p-ethoxychrysoidine, dicyclohexylammonium nitrite, dicyclohexylammonium salicylate, monoethanolamine benzoate, dicyclohexylammonium benzoate, diisopropylammonium benzoate, diisopropylammonium nitrite, cyclohexylamine carbamate, nitronaphthaleneammonium nitrite, cyclohexylamine benzoate, dicyclohexylammonium cyclohexanecarboxylate, cyclohexylamine cyclohexanecarboxylate, dicyclohexylammonium acrylate, cyclohexylamine acrylate, and mixtures of these compounds.

Examples of compounds having pyrrole rings include N-butyl-2,5-dimethylpyrrole, N-phenyl-2,5-dimethylpyrrole, N-phenyl-3-formyl-2,5-dimethylpyrrole, N-phenyl-3,4-diformyl-2,5-dimethylpyrrole, and mixtures of these compounds.

Examples of compounds having triazole rings include 1,2,3-triazole, 1,2,4-thiazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolyltriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-tert-butylphenyl)benzotriazole, 2-(2'-hydroxy-3'5'-di-tert-butylphenyl)benzotriazole, 2-(2'-hydroxy-4-octoxyphenyl)benzotriazole, and mixtures of these compounds.

Examples of compounds having pyrazole rings include pyrazole, pyrazoline, pyrazolone, pyrazolidine, pyrazolidone, 3,5-dimethylpyrazole, 3-methyl-5-hydroxypyrazole, 4-aminopyrazole, and mixtures of these compounds.

Examples of compounds having thiazole rings includes thiazole, thiazoline, thiazolone, thiazolidine, thiazolidone, isothiazole, benzothiazole, 2-N,N-diethylthiobenzothiazole, P-dimethylaminobenzalrhodanine, 2-mercaptobenzothiazole, and mixtures of these compounds.

Examples of compounds having imidazole rings include imidazole, histidine, 2-heptadecylimidazole, 2-methylimidazole, 2-ethyl-4-methylimidazole, 2-phenylimidazole, 2-undecylimidazole, 1-benzyl-2-methylimidazole, 2-phenyl-4-methylimidazole, 1-cyanoethyl-2-methylimidazole, l-cyanoethyl-2-phenylimidazole, 1-cyanoethyl-2-ethyl-4-methylimidazole, 1-cyanoethyl-2-undecylimidazole, 2-phenyl-4-methyl-5-hydromethylimidazole, 2-phenyl-4, 5-dihydroxymethylimidazole, 4-formylimidazole, 2-methyl-4-formylimidazole, 2-phenyl-4-formylimidazole, 4-methyl-5-formylimidazole, 2-ethyl-4-methyl-5-formylimidazole, 2-phenyl-4-methyl-4-formylimidazole, 2-mercaptobenzimidazole, and mixtures of these compounds.

Examples of compounds having indazole rings include 4-chloroindazole, 4-nitroindazole, 5-nitroindazole, 4-chloro-5-nitroindazole, and mixtures of these compounds.

Examples of copper chelate compounds include copper acetylacetone, copper ethylenediamine, copper phthalocyanine, copper ethylenediaminetetraacetate, copper hydroxyquinoline, and mixtures of these compounds.

Examples of thioureas include thiourea, guanylthiourea, and mixtures of these materials.

Examples of compounds having mercapto groups include mercaptoacetic acid, thiophenol, 1,2-ethanediol, 3-mercapto-1,2,4-triazole, 1-methyl-3-mercapto-1,2,4-triazole, 2-mercaptobenzothiazole, 2-mercaptobenzimidazole, glycol dimercaptoacetate, 3-mercaptopropyltrimethoxysilane, and mixtures of these compounds.

Examples of naphthalenes include thionalide and the like.

### (9) Ultraviolet absorption layer

The ultraviolet absorption layer is a layer that contains an ultraviolet absorber so as to prevent degradation of the film mirror due to sunlight and ultraviolet rays. The ultraviolet absorption layer is preferably located closer to the light incidence side than the resin substrate is. In a case where an anticorrosion layer is provided, the ultraviolet absorption layer is preferably located closer to the light incidence side than the anticorrosion layer is.

The ultraviolet absorption layer can use a resin as a binder. Examples of resins that can be used include cellulose ester resins, polyester resins, polycarbonate resins, polyarylate resins, polysulfone (or polyethersulfone) resins, polyesters such as polyethylene terephthalate and polyethylene naphthalate, polyethylene, polypropylene, cellophane, cellulose diacetate, cellulose triacetate, cellulose acetate propionate, cellulose acetate butyrate, polyvinylidene chloride, polyvinyl alcohol, ethylene vinyl alcohol, syndiotactic polystyrene resins, polycarbonate, norbornene resins, polymethylpentene, polyether ketone, polyether ketone imide, polyamide, fluororesins, nylon, polymethyl methacrylate, acrylic resins, and the like. Of these resins, acrylic resins are particularly preferable. The thickness of the ultraviolet absorption layer is preferably 1 µm to 200 µm.

The ultraviolet absorption layer may not be formed in the film mirror. Instead, an ultraviolet absorber may be added to one of the layers located closer to the light incidence side than the resin substrate is, so that the layer having the ultraviolet absorber added thereto also serves as the ultraviolet absorption layer. For example, it is preferable to add the ultraviolet absorber to the protection layer.

Ultraviolet absorbers are roughly classified into organic types and inorganic types.

Examples of organic ultraviolet absorbers include benzophenone-based ultraviolet absorbers, benzotriazole-based ultraviolet absorbers, phenyl salicylate-based ultraviolet absorbers, triazine-based ultraviolet absorbers, and the like. Examples of inorganic ultraviolet absorbers include titanium oxide, zinc oxide, cerium oxide, iron oxide, and the like.

Examples of benzophenone-based ultraviolet absorbers include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, 2,2'4,4'-tetrahydroxy-benzophenone, and the like.

Examples of benzotriazole-based ultraviolet absorbers include 2-(2'-hydroxy-5-methylphenyl)benzotriazole, 2-(2'-hydroxy-3',5'-di-t-butylphenyl)benzotriazole, 2-(2'-hydroxy-3'-t-butyl-5'-methylphenyl)benzotriazole, and the like.

Examples of phenyl salicylate-based ultraviolet absorbers include phenyl salicylate, 2-4-di-t-butylphenyl-3,5-di-t-butyl-4-hydroxybenzoate, and the like. Examples of hindered amine-based ultraviolet absorbers include bis(2,2,6,6-tetramethylpiperidine-4-yl)sebacate and the like.

Examples of triazine-based ultraviolet absorbers include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benziloxyphenyl)-1,3,5-triazine, and the like.

Other than the above ultraviolet absorbers, a compound that has a function to convert energy of ultraviolet rays into vibrational energy and emit the vibrational energy as thermal energy and the like can be used as the ultraviolet absorber. It is also possible to use a compound that achieves effects when used in conjunction with an antioxidant or a colorant. Further, a light stabilizer called a quencher that acts like a light energy conversion agent can be used in conjunction with the ultraviolet absorber.

The amount of the ultraviolet absorber to be used is 0.1 to 20 mass%, or more preferably, 1 to 15 mass%, or even more preferably, 3 to 10 mass%. With the amount being within such ranges, weatherability can be improved while excellent adhesiveness of the other layers in the film is maintained.

### (10) Bonding layer

The bonding layer is not particularly limited, as long as it has the function to increase bonding properties between layers. In the example shown in Fig. 1, the bonding layer is provided so as to increase the bonding properties between the acrylic layer and the anticorrosion layer, and bond the acrylic layer to the resin substrate side. Therefore, the bonding layer needs to have the adhesiveness for bonding the layers to each other, and the smoothness for extracting the high reflective properties the reflective silver layer is originally capable of.

In terms of adhesiveness, smoothness, the reflectance of the reflective material, and the like, the thickness of the bonding layer is preferably 0.01 to 10 µm, or more preferably, 0.1 to 10 µm.

In a case where the bonding layer is made of a resin, the resin is not particularly limited, as long as the resin satisfies the above mentioned conditions with respect to adhesiveness and smoothness. It is possible to use one or a mixture of a polyester resin, a urethane resin, an acrylic resin, a melamine resin, an epoxy resin, a polyamide resin, a vinyl chloride resin, a vinyl chloride-vinyl acetate copolymer resin, and the like. In terms of weatherability, a mixed resin of a polyester resin and a melamine resin is preferable, and a thermosetting resin containing a hardener such as isocyanate is more preferable. The bonding layer can be formed by using a known coating method such as a gravure coating method, a reverse coating method, or a die coating method.

In a case where the bonding layer is a metal oxide, a film is formed from silicon oxide, aluminum oxide, silicon nitride, aluminum nitride, lanthanum oxide, lanthanum nitride, or the like by a vacuum film forming method. For example, the bonding layer can be formed by a resistance heating vacuum vapor deposition method, an electronic beam heating vacuum vapor deposition method, an ion plating method, an ion beam assisted vacuum vapor deposition method, a sputtering method, or the like.

### (11) Adhesive layer

The adhesive layer is a layer for bonding and securing the film mirror onto a metal substrate.

This adhesive layer is not particularly limited, as long as the film mirror can be bonded onto the metal substrate. For example, it is possible to use a dry laminate agent, a wet laminate agent, an adhesive agent, a heat sealing agent, a hot-melt agent, or the like. It is also possible to use a polyester resin, a urethane resin, a polyvinyl acetate resin, an acrylic resin, nitrile rubber, or the like.

The lamination technique for providing the adhesive layer on the back surface of the resin substrate is not particularly limited, and any method of forming the adhesive layer in a continuous manner with a roller is preferable in terms of costs and productivity.

The thickness of the adhesive layer is preferably 1 to 50 µm, in terms of adhesiveness, drying speed, and the like.

Specific preferred examples of materials that can be used for the adhesive layer include: "SK-DYNE" series, manufactured by Soken Chemical & Engineering Co., Ltd.; Oribain BPW series and BPS series, manufactured by Toyo Ink Co., Ltd.; "ARKON", "SUPER ESTER", and "HYPALE", manufactured by Arakawa Chemical Industries, Ltd., and the like.

The adhesive layer is covered with a peel-off sheet before the film mirror is bonded onto a metal substrate. In this manner, the adhesive force of the adhesive layer is maintained.

### (12) Reflecting device for solar power generation

As shown in Fig. 1, a reflecting device 20 for solar power generation is formed with the film mirror 10 and the metal substrate 1 as the supporting member. Specifically, the reflecting device 20 for solar power generation is formed by bonding the adhesive layer 2 of the film mirror 10 onto the metal substrate 1.

### (12-1) Metal substrate

The metal substrate is the supporting member for supporting the attached film mirror and maintaining the reflecting surface of the film mirror in good condition.

The metal substrate of the reflecting device for solar power generation may be a metal material such as a steel sheet, a copper sheet, an aluminum sheet, an aluminum coated sheet, an aluminum alloy coated sheet, a copper coated sheet, a tin coated sheet, a chromium coated sheet, or a stainless steel sheet. In the present invention, it is particularly preferable to use a coated steel sheet, a stainless steel sheet, or an aluminum sheet that excel in corrosion resistance.

The thicknesses of these metal substrates are preferably 0.05 to 3 mm, in terms of usability, heat conductivity, heat capacity, and the like.

### (13) Method of manufacturing the film mirror

An example of a method of manufacturing the film mirror is described.

First, silver is vapor-deposited on the upper surface of the resin substrate 3, to form the reflection layer 4.

A binder containing a corrosion inhibitor is applied onto the upper surface of the reflection layer 4, and is then dried, to form the anticorrosion layer 5. The bonding layer 6 is formed on the anticorrosion layer 5.

An acrylic resin is then applied onto the upper surface of the bonding layer 6, to form the acrylic layer 7. Further, a corona treatment is performed on the upper surface of the formed acrylic layer 7, to modify the surface. The upper surface of the acrylic layer 7 modified through the corona treatment is rich in reactive groups (such as OH groups or COOH groups).

A solution containing at least one of polyvinyl alcohol resin, polyvinyl acetate, cellulose, and water glass is applied onto the upper surface of the acrylic layer 7, followed by drying, to form the intermediate layer 8. A solution containing a polysiloxane compound is then applied onto the upper surface of the intermediate layer 8, followed by drying, to form the protection layer 9. It is preferable to further perform a heat treatment on the acrylic layer 7, the intermediate layer 8, and the protection layer 9. In this manner, hardening and cross linkage of the protection layer can be facilitated, and the interlayer coupling between the acrylic layer 7 and the intermediate layer 8, and the interlayer coupling between the intermediate layer 8 and the protection layer 9 can be strengthened.

The adhesive layer 2 is then formed on the back surface of the resin substrate 3, to complete the film mirror 10.

Further, the reflecting device 20 can be manufactured by bonding the adhesive layer 2 of the film mirror 10 onto the metal substrate 1.

### Examples

The following is a detailed description of the present invention through examples and comparative example. However, the present invention is not limited to these examples. In the examples and comparative examples below, "part(s)" and "%" are used to indicate "part(s) by mass" and "percent by mass", respectively, unless otherwise noted.

### (Methods of Manufacturing a Film Mirror)

### (Film Mirror 1: Manufacturing of FM1)

A biaxially-oriented polyester film (a polyethylene terephthalate film, 25 µm in thickness) was used as a resin substrate 3. A polyester resin (POLYESTER SP-181, manufactured by The Nippon Synthetic Chemical Industry Co., Ltd.) and a TDI (tolylene diisocyanate)-based isocyanate (2,4-tolylene diisocyanate) were mixed at a resin solid content ratio of 10 : 2, and methyl ethyl ketone was added as a solvent thereto. Further, 10 mass% of glycol dimercaptoacetate (manufactured by Wako Pure Chemical Industries, Ltd.) was prepared as the corrosion inhibitor, and was mixed therewith. One surface of the polyester film was coated with the resultant mixture by a gravure coating method, to form an anchor layer (anticorrosion layer) of 100 nm in thickness.

A silver film of 80 nm was then formed on the anchor layer by a vapor deposition method, to form a reflection layer 4.

An anticorrosion layer 5 was formed on the reflection layer 4 in the same manner as above, except that Tinuvin 234 (manufactured by Ciba Japan K. K.) was used instead of the glycol dimercaptoacetate used in the anchor layer. The upper surface of the anticorrosion layer 5 was coated with a 5-µm thick ultraviolet absorption polymer "NEWCOAT UVA-204W" (manufactured by Shin-Nakamura Chemical Co., Ltd.) by a gravure coating method, to form an ultraviolet absorption layer.

The upper surface of the ultraviolet absorption layer was then coated with a 5-µm thick adhesive agent TBS-730 (manufactured by Dainippon Ink and Chemicals, Inc.) by a gravure coating method, to form a bonding layer 6. A 75-µm thick acrylic film "SUMIPEX TECHNOLLOY S001G" (manufactured by Sumitomo Chemical Co., Ltd.) containing an ultraviolet absorber was bonded onto the bonding layer 6, to form an acrylic layer 7.

An intermediate layer coating solution No. 1 having 5 mass% of PVA-403 (manufactured by Kuraray Co., Ltd.) dissolved in water was applied onto the acrylic layer 7, followed by 2-minute drying at 80°C, to form an intermediate layer 8. The thickness of this intermediate layer 8 after the drying was 0.5 µm.

An acrylic silicone thermosetting resin, SARCoat NP-720 (a mixed solution of 30 mass% of methanol and 1-propanol: manufactured by Doken Co., Ltd.), was applied onto the intermediate layer 8, followed by 90-second drying at 80°C and a 48-hour heat treatment at 45°C, to form a protection layer 9. In this manner, a film mirror 1 (FM1) was manufactured. The thickness of this protection layer 9 after the drying was 3 µm.

### (Film Mirror 2: Manufacturing of FM2)

Instead of the intermediate layer of the above described film mirror (FM1), an intermediate layer 8 was formed by applying an intermediate layer coating solution No. 2 having 5 mass% of EM32 (manufactured by Cemedine Co., Ltd.) dispersed in water onto the acrylic layer 7, followed by 2-minute drying at 80°C. Other than that, a film mirror 2 (FM2) was manufactured in the same manner as the film mirror 1 (FM1). The thickness of this intermediate layer 8 after the drying was 0.5 µm.

### (Film Mirror 3: Manufacturing of FM3)

Instead of the intermediate layer of the above described film mirror (FM1), an intermediate layer 8 was formed by applying an intermediate layer coating solution No. 3 having 5 mass% of Daicel CMC 1120 (manufactured by Daicel FineChem Ltd.) dissolved in water onto the acrylic layer 7, followed by 2-minute drying at 80°C. Other than that, a film mirror 3 (FM3) was manufactured in the same manner as the film mirror 1 (FM1). The thickness of this intermediate layer 8 after the drying was 0.5 µm.

### (Film Mirror 4: Manufacturing of FM4)

Instead of the intermediate layer of the above described film mirror (FM1), an intermediate layer 8 was formed by applying an intermediate layer coating solution No. 4 having 5 mass% of Daicel HEC SP200 (manufactured by Daicel FineChem Ltd.) dissolved in water onto the acrylic layer 7, followed by 2-minute drying at 80°C. Other than that, a film mirror 4 (FM4) was manufactured in the same manner as the film mirror 1 (FM1). The thickness of this intermediate layer 8 after the drying was 0.5 µm.

### (Film Mirror 5: Manufacturing of FM5)

Instead of the intermediate layer of the above described film mirror (FM1), an intermediate layer 8 was formed by applying an intermediate layer coating solution No. 5 having 5 mass% of J sodium silicate No. 1 (manufactured by Nippon Chemical Industrial Co., Ltd.) dissolved in water onto the acrylic layer 7, followed by 2-minute drying at 80°C. Other than that, a film mirror 5 (FM5) was manufactured in the same manner as the film mirror 1 (FM1). The thickness of this intermediate layer 8 after the drying was 0.5 µm.

### (Film Mirror 6: Manufacturing of FM6)

An intermediate layer 8 was formed by further applying the intermediate layer coating solution No. 1 onto the intermediate layer formed by applying the intermediate layer coating solution No. 2 in the manufacturing of the above described film mirror (FM2), followed by 2-minute drying at 80°C. Other than that, a film mirror 6 (FM6) was manufactured in the same manner as the film mirror 2 (FM2). The thickness of this intermediate layer 8 after the drying was 1.0 µm.

### (Film Mirror 7: Manufacturing of FM7)

An intermediate layer 8 was formed by further applying the intermediate layer coating solution No. 1 onto the intermediate layer formed by applying the intermediate layer coating solution No. 5 in the manufacturing of the above described film mirror (FM5), followed by 2-minute drying at 80°C. Other than that, a film mirror 7 (FM7) was manufactured in the same manner as the film mirror 5 (FM5). The thickness of this intermediate layer 8 after the drying was 1.0 µm.

### (Film Mirror 8: Manufacturing of FM8)

Instead of the intermediate layer of the above described film mirror (FM1), an intermediate layer 8 was formed by applying the intermediate layer coating solution No. 8 shown below onto the acrylic layer 7, followed by 2-minute drying at 80°C. Other than that, a film mirror 8 (FM8) was manufactured in the same manner as the film mirror 1 (FM1). The thickness of this intermediate layer 8 after the drying was 0.5 µm.

### -Intermediate layer coating solution No. 8

| | |
|---|---|
| PVA-403 (manufactured by Kuraray Co., Ltd.) | 4.5 parts by mass |
| Duranate WT20-100 (manufactured by Asahi Kasei Chemicals Corporation) | 0.5 parts by mass |
| Water | 95.0 parts by mass |

### (Film Mirror 9: Manufacturing of FM9)

Instead of the intermediate layer of the above described film mirror (FM1), an intermediate layer 8 was formed by applying the intermediate layer coating solution No. 9 shown below onto the acrylic layer 7, followed by 2-minute drying at 80°C. Other than that, a film mirror 9 (FM9) was manufactured in the same manner as the film mirror 1 (FM1). The thickness of this intermediate layer 8 after the drying was 0.5 µm.

### -Intermediate layer coating solution No. 9

| | |
|---|---|
| Daicel CMC 1120 (manufactured by Daicel FineChem | |
| Ltd.) | 4.5 parts by mass |
| Duranate WT20-100 (manufactured by Asahi Kasei Chemicals Corporation) | 0.5 parts by mass |
| Water | 95.0 parts by mass |

### (Film Mirror 10: Manufacturing of FM10)

Instead of the intermediate layer of the above described film mirror (FM1), an intermediate layer 8 was formed by applying the intermediate layer coating solution No. 10 shown below onto the acrylic layer 7, followed by 2-minute drying at 80°C. Other than that, a film mirror 10 (FM10) was manufactured in the same manner as the film mirror 1 (FM1). The thickness of this intermediate layer 8 after the drying was 0.5 µm.

### -Intermediate layer coating solution No. 10

| | |
|---|---|
| EM32 (manufactured by Cemedine Co., Ltd.) | 4.5 parts by mass |
| Duranate WT20-100 (manufactured by Asahi Kasei Chemicals Corporation) | 0.5 parts by mass |
| Water | 95.0 parts by mass |

### (Film Mirror 11: Manufacturing of FM11)

Instead of the intermediate layer of the above described film mirror (FM1), an intermediate layer 8 was formed by applying an intermediate layer coating solution No. 11 having 1 mass% of PVA-403 (manufactured by Kuraray Co., Ltd.) dissolved in water onto the acrylic layer 7, followed by 2-minute drying at 80°C. Other than that, a film mirror 11 (FM11) was manufactured in the same manner as the film mirror 1 (FM1). The thickness of this intermediate layer 8 after the drying was 0.1 µm.

### (Film Mirror 12: Manufacturing of FM12)

Instead of the intermediate layer of the above described film mirror (FM1), an intermediate layer 8 was formed by applying an intermediate layer coating solution No. 12 having 10 mass% of PVA-403 (manufactured by Kuraray Co., Ltd.) dissolved in water onto the acrylic layer 7, followed by 2-minute drying at 80°C. Other than that, a film mirror 12 (FM12) was manufactured in the same manner as the film mirror 1 (FM1). The thickness of this intermediate layer 8 after the drying was 1.0 µm.

### (Film Mirror 13: Manufacturing of FM13)

Instead of the intermediate layer of the above described film mirror (FM1), an intermediate layer 8 was formed by applying an intermediate layer coating solution No. 13 having 15 mass% of PVA-403 (manufactured by Kuraray Co., Ltd.) dissolved in water onto the acrylic layer 7, followed by 2-minute drying at 80°C. Other than that, a film mirror 13 (FM13) was manufactured in the same manner as the film mirror 1 (FM1). The thickness of this intermediate layer 8 after the drying was 5.0 µm.

### (Film Mirror 14: Manufacturing of FM14)

Instead of the intermediate layer of the above described film mirror (FM1), an intermediate layer 8 was formed by applying the intermediate layer coating solution No. 13 having 15 mass% of PVA-403 (manufactured by Kuraray Co., Ltd.) dissolved in water onto the acrylic layer 7, followed by 2-minute drying at 80°C. Other than that, a film mirror 14 (FM14) was manufactured in the same manner as the film mirror 1 (FM1). The thickness of this intermediate layer 8 after the drying was 5.5 µm.

### (Film Mirror 15: Manufacturing of FM15)

The intermediate layer was not formed in the manufacturing of the above described film mirror (FM1), and an acrylic silicone thermosetting resin, SARCoat NP-720 (a mixed solution of 30 mass% of methanol and 1-propanol: manufactured by Doken Co., Ltd.), was applied onto the acrylic layer 7, followed by 90-second drying at 80°C and a 48-hour heat treatment at 45°C. In this manner, a protection layer 9 was formed, and a film mirror 15 (FM15) was manufactured. The thickness of this protection layer 9 after the drying was 3 µm.

### (Film Mirror 16: Manufacturing of FM16)

The protection layer 9 was not formed in the manufacturing of the above described film mirror (FM1), and a film mirror 16 (FM16) having the intermediate layer 8 as the outermost surface was manufactured.

### (Evaluations of the Film Mirrors)

Reflectance measurement, sandblast damage resistance evaluations, and evaluations with respect to weatherability against ultraviolet irradiation were conducted on the above manufactured film mirrors (FM1 to FM16) in the manners described below.

### (Initial Reflectance Measurement)

Reflectances of the manufactured film mirrors (FM1 to FM16) were measured.

The device used there was prepared by attaching an auxiliary integrating sphere reflecting device to a spectrophotometer UV265, manufactured by Shimadzu Corporation, and adjusting the incident angle of incident light with respect to the normal line of the reflection surface to 5 degrees. Regular reflectances of each of the film mirrors at a reflection angle of 5 degrees were measured in the range of 250 nm to 2500 nm. The mean reflectance was set as the reflectance. The reflectance measured immediately after the manufacturing of the film mirror was set as the initial reflectance.

### (Sandblast Evaluations)

Each of the film mirrors (FM1 to FM16) was positioned at an angle of inclination of 60 degrees in a predetermined position. Glass beads #60 (GBL #60 compliant with JIS Z 8901) were blown toward the reflection surfaces of the film mirrors at a wind speed of 20 meters per second for five minutes (sandblast test), and reflectances of the samples (film mirrors) were measured after the sand was removed from the surfaces with ethanol. Reflectance differences in the range of 250 to 2500 nm between before and after the sandblast test were evaluated. Samples with smaller reflectance differences between before and after the sandblast test have higher resistances to damage.

### (Weatherability Evaluations)

A 2000-hour ultraviolet irradiation process at 63°C was performed on the manufactured film mirrors (FM1 to FM16) with the use of Eye Super UV Tester, manufactured by Iwasaki Electric Co., Ltd. Reflectances were then measured, and reflectance differences between before and after the ultraviolet irradiation were calculated. Samples with smaller reflectance differences between before and after the ultraviolet irradiation have excellent weatherability.

The results of the evaluations of those film mirrors (FM1 to FM16) are shown in Table 1.

**(Table 1)**

| | Name | Intermediate layer | Intermediate layer thickness [µm] | Polyisocyanate | Protection layer thickness [µm] | Initial reflectance | Sandblast evaluation ΔReflectance | Weatherability evaluation ΔReflectance |
|---|---|---|---|---|---|---|---|---|
| Example 1 | FM1 | PVA-403 | 0.5 | - | 3 | 93.5% | -2.0 | -1.5 |
| Example 2 | FM2 | EM32 | 0.5 | - | 3 | 93.0% | -2.0 | -1.5 |
| Example 3 | FM3 | Daicel CMC 1120 | 0.5 | - | 3 | 93.0% | -2.0 | -1.5 |
| Example 4 | FM4 | HEC Daicel SP-200 | 0.5 | - | 3 | 92.0% | -2.0 | -1.5 |
| Example 5 | FM5 | J sodium silicate No. 1 | 0.5 | - | 3 | 93.0% | -3.0 | -1.5 |
| Example 6 | FM6 | PVA-403 EM32 | 0.5 | - | 3 | 93.0% | -1.0 | -1.0 |
| Example 7 | FM7 | PVA-403 J sodium silicate No. 1 | 0.5 | - | 3 | 93.0% | -1.0 | -0.5 |
| Example 8 | FM8 | PVA-403 | 0.5 | Duranate WT20-100 | 3 | 90.0% | -1.0 | -0.5 |
| Example 9 | FM9 | Daicel CMC 1120 | 0.5 | Duranate WT20-100 | 3 | 91.0% | -1.0 | -0.5 |
| Example 10 | FM10 | EM32 | 0.5 | Duranate WT20-100 | 3 | 91.0% | -1.0 | -0.5 |
| Example 11 | FM11 | PVA-403 | 0.1 | - | 3 | 93.5% | -2.0 | -1.5 |
| Example 12 | FM12 | PVA-403 | 1 | - | 3 | 93.5% | -2.0 | -2.5 |
| Example 13 | FM13 | PVA-403 | 5 | - | 3 | 92.0% | -1.0 | -4.0 |
| Example 14 | FM14 | PVA-403 | 5.5 | - | 3 | 92.0% | -1.0 | -5.0 |
| Comparative Example 1 | FM15 | - | - | - | 3 | 93.5% | -15 | -10 |
| Example 2 | FM16 | PVA-403 | 0.5 | - | - | 93.5% | -30 | -15 |

As can be seen the results shown in Table 1, the film mirrors (FM1 to FM14) containing at least one of polyvinyl alcohol resin, polyvinyl acetate, cellulose, and water glass in the intermediate layers 8 have small reflectance decreases and high resistances to damage in the sandblast evaluations, and also have excellent light resistance.

Particularly, the film mirrors (FM8 to FM10) containing polyisocyanate (a polysiloxane compound) in the intermediate layers 8 have high resistances to damage.

### (Film Mirror 17: Manufacturing of FM17)

Instead of the intermediate layer of the above described film mirror (FM1), an intermediate layer 8 was formed by applying the intermediate layer coating solution No. 17 shown below onto the acrylic layer 7, followed by 2-minute drying at 80°C. Other than that, a film mirror 17 (FM17) was manufactured in the same manner as the film mirror 1 (FM1). The thickness of this intermediate layer 8 after the drying was 0.5 µm.

### -Intermediate layer coating solution No. 17

| | |
|---|---|
| PVA-403 (manufactured by Kuraray Co., Ltd.) | 3.5 parts by mass |
| CELNAX CX-Z330H (manufactured by Nissan Chemical Industries, Ltd.) | 1.5 parts by mass |
| Water | 95.0 parts by mass |

It should be noted that CELNAX CX-Z330H was added as conductive fine particles to the intermediate layer coating solution No. 17, so that the intermediate layer 8 achieved an antistatic effect.

### (Film Mirror 18: Manufacturing of FM18)

Instead of the intermediate layer of the above described film mirror (FM1), an intermediate layer 8 was formed by applying the intermediate layer coating solution No. 18 shown below onto the acrylic layer 7, followed by 2-minute drying at 80°C. Other than that, a film mirror 18 (FM18) was manufactured in the same manner as the film mirror 1 (FM1). The thickness of this intermediate layer 8 after the drying was 0.5 µm.

### -Intermediate layer coating solution No. 18

| | |
|---|---|
| PVA-403 (manufactured by Kuraray Co., Ltd.) | 3.0 parts by mass |
| CELNAX CX-Z330H (manufactured by Nissan Chemical Industries, Ltd.) | 1.5 parts by mass |
| Duranate WT20-100 (manufactured by Asahi Kasei Chemicals Corporation) | 0.5 parts by mass |
| Water | 95.0 parts by mass |

It should be noted that CELNAX CX-Z330H was added as conductive fine particles to the intermediate layer coating solution No. 18, so that the intermediate layer 8 achieved an antistatic effect.

### (Evaluations of the Film Mirrors)

Initial reflectance measurement, sandblast evaluations, and weatherability evaluations were conducted on the above manufactured film mirrors (FM1, FM8, and FM15 to FM18) in the same manners as described above. Further, evaluations with respect to sand adhesion were conducted in the manner described below.

### (Sand Adhesion Measurement)

After three kinds of particles for JIS test specified in JIS Z 8901 were heated in an oven at 150°C for two hours and were then cooled in a desiccator, 1000 g of the particles were sprinkled at a rate of 100 g per minute from 60 cm above onto the samples tilted at 60 degrees. With the sand remaining adhering to the samples, reflectances at 85 degrees were measured with a glossmeter GM-268 (manufactured by Konica Minolta, Inc.), and reflectance differences between before and after the sand adhesion were calculated. Samples that have smaller reflectance differences between before and after the sand adhesion have less sand adhering thereto, and have excellent properties.

The results of the evaluations of those film mirrors (FM1, FM8, and FM15 to FM18) are shown in Table 2.

**(Table 2)**

| | Name | Intermediate layer | Intermediate layer thickness [µm] | Polyisocyanate | Conductive fine particles | Protection layer thickness [µm] | Initial reflectance | Sandblast evaluation ΔReflectence | Weatherability evaluation ΔReflectance | Sand adhesion evaluation |
|---|---|---|---|---|---|---|---|---|---|---|
| Example 1 | FM1 | PVA-403 | 0.5 | - | - | 3 | 93.5% | -2.0 | -1.5 | -18 |
| Example 8 | FM8 | PVA-403 | 0.5 | Duranate WT20-100 | - | 3 | 90.0% | -1.0 | -0.5 | -18 |
| Example 15 | FM17 | PVA-403 | 0.5 | - | CELNAX CX-Z330H | 3 | 92.5% | -2.0 | -0.5 | -10 |
| Example 16 | FM18 | PVA-403 | 0.5 | Duranate WT20-100 | CELNAX CX-Z330H | 3 | 89.0% | -1.0 | -0.5 | -10 |
| Comparative Example 1 | FM15 | - | - | - | - | 3 | 93.5% | -15 | -10 | -35 |
| Comparative Example 2 | FM16 | PVA-403 | 0.5 | - | - | - | 93.5% | -30 | -15 | -50 |

As can be seen from the results shown in Table 2, the film mirrors (FM17 and FM18) containing conductive fine particles in the intermediate layer 8 have greatly improved sand adhesion, and have smaller reflectance decreases due to sand adhesion. That is, sand does not easily adhere to the surfaces of the film mirrors containing conductive fine particles. Accordingly, when the film mirrors are cleaned, adhering sand is prevented from scratching against the surfaces of the film mirrors, and the film mirrors can maintain high resistances to damage.

As described above, according to the present invention, film mirrors (functional films) that are highly resistant to damage can be obtained.

### (Film Mirror 19: Manufacturing of FM19)

A biaxially-oriented polyester film (a polyethylene terephthalate film, 25 µm in thickness) was used as a resin substrate 3. A polyester resin (POLYESTER SP-181, manufactured by The Nippon Synthetic Chemical Industry Co., Ltd.) and a TDI (tolylene diisocyanate)-based isocyanate (2,4-tolylene diisocyanate) were mixed at a resin solid content ratio of 10 : 2, and methyl ethyl ketone was added as a solvent thereto. Further, 10 mass% of glycol dimercaptoacetate (manufactured by Wako Pure Chemical Industries, Ltd.) was prepared as the corrosion inhibitor, and was mixed therewith. One surface of the polyester film was coated with the resultant mixture by a gravure coating method, to form an anchor layer (anticorrosion layer) of 100 nm in thickness.

A silver film of 80 nm was then formed on the anchor layer by a vapor deposition method, to form a reflection layer 4.

An anticorrosion layer 5 was formed on the reflection layer 4 in the same manner as above, except that Tinuvin 234 (manufactured by Ciba Japan K. K.) was used instead of the glycol dimercaptoacetate used in the anchor layer. The upper surface of the anticorrosion layer 5 was coated with a 5-µm thick ultraviolet absorption polymer "NEWCOAT UVA-204W" (manufactured by Shin-Nakamura Chemical Co., Ltd.) by a gravure coating method, to form an ultraviolet absorption layer.

The upper surface of the ultraviolet absorption layer was then coated with a 5-µm thick adhesive agent TBS-730 (manufactured by Dainippon Ink and Chemicals, Inc.) by a gravure coating method, to form a bonding layer 6. A 75-µm thick acrylic film "SUMIPEX TECHNOLLOY S001G" (manufactured by Sumitomo Chemical Co., Ltd.) containing an ultraviolet absorber was bonded onto the bonding layer 6, to form an acrylic layer 7.

The surface of the acrylic film on the opposite side from the surface in contact with the bonding layer 6 was subjected to a surface treatment through 10-kW corona discharge, with the conveyance speed being 20 m/min and the distance between the film surface and the corona discharge surface being 2 mm.

The intermediate layer coating solution No. 1 having 5 mass% of PVA-403 (manufactured by Kuraray Co., Ltd.) dissolved in water was applied onto the acrylic layer 7, followed by 2-minute drying at 80°C, to form an intermediate layer 8. The thickness of this intermediate layer 8 after the drying was 0.5 µm.

An acrylic silicone thermosetting resin, SARCoat NP-720 (a mixed solution of 30 mass% of methanol and 1-propanol: manufactured by Doken Co., Ltd.), was applied onto the intermediate layer 8, followed by 90-second drying at 80°C and a 48-hour heat treatment at 45°C, to form a protection layer 9. In this manner, a film mirror 19 (FM19) was manufactured. The thickness of this protection layer 9 after the drying was 3 µm.

### (Film Mirror 20: Manufacturing of FM20)

An intermediate layer 8 was formed by applying the above described intermediate layer coating solution No. 8 onto the acrylic layer 7 of the above described film mirror (FM19) subjected to the surface treatment through corona discharge, followed by 2-minute drying at 80°C. Other than that, a film mirror 20 (FM20) was manufactured in the same manner as the film mirror 19 (FM19). The thickness of this intermediate layer 8 after the drying was 0.5 µm.

### (Film Mirror 21: Manufacturing of FM21)

An intermediate layer 8 was formed by applying the above described intermediate layer coating solution No. 18 onto the acrylic layer 7 of the above described film mirror (FM19) subjected to the surface treatment through corona discharge, followed by 2-minute drying at 80°C. Other than that, a film mirror 21 (FM21) was manufactured in the same manner as the film mirror 19 (FM19). The thickness of this intermediate layer 8 after the drying was 0.5 µm.

### (Evaluations of the Film Mirrors)

Initial reflectance measurement and weatherability evaluations were conducted on the above manufactured film mirrors (FM1, FM8, FM15, FM16, and FM18 to FM21) in the same manners as described above. Further, evaluations with respect to adhesiveness were conducted in the manner described below.

### (Adhesiveness Evaluations)

A simulation of a grid tape test specified in former JIS K 5400 was performed on each manufactured film mirror by forming 100 squares with slits in a grid pattern and evaluating adhesiveness under the two conditions described below. A sample that has a larger number of remaining squares out of the 100 squares has excellent adhesiveness.
1. A tape test was conducted immediately after the manufacturing of the film, and evaluation was made when the film was detached for the fifth time (Initial adhesiveness).
2. After a 2000-hour ultraviolet irradiation process at 63°C was performed on the manufactured film mirror with the use of Eye Super UV Tester, manufactured by Iwasaki Electric Co., Ltd., a tape test was conducted, and evaluation was made when the tape was detached for the fifth time (adhesiveness after weatherability evaluation).

The results of the evaluations of those film mirrors (FM1, FM8, FM15, FM16, and FM18 to FM21) are shown in Table 3.

**(Table 3)**

| | Name | Corona Treatment | Initial reflectance | Weatherability evaluation ΔReflectance | Adhesiveness after weatherability evaluation | |
|---|---|---|---|---|---|---|
| | | | | | Initial adhesiveness | Adhesiveness after weatherability evaluation |
| Example 1 | FM1 | Not conducted | 93.5% | -1.5 | 100 | 30 |
| Example 8 | FM8 | Not conducted | 90.0% | -0.5 | 100 | 50 |
| Example 16 | FM18 | Not conducted | 89.0% | -0.5 | 100 | 50 |
| Example 17 | FM19 | Conducted | 93.5% | -1.5 | 100 | 80 |
| Example 18 | FM20 | Conducted | 90.0% | -0.5 | 100 | 100 |
| Example 19 | FM21 | Conducted | 89.0% | -0.5 | 100 | 100 |
| Comparative Example 1 | FM15 | Not conducted | 93.50% | -10 | 100 | 0 |
| Comparative Example 2 | FM16 | Not conducted | 93.50% | -15 | 100 | 0 |

As can be seen from the results shown in Table 3, adhesiveness after weatherability evaluation greatly increases in the cases where the surface of the acrylic layer 7 of the film mirror is subjected to the surface treatment through corona discharge.

### (Methods of Manufacturing a Heat Shielding Film)

### (Heat Shielding Film 1: Manufacturing of HS-1)

A biaxially-oriented polyester film (a polyethylene terephthalate film, 25 µm in thickness) was used as a resin substrate 3. A polyester resin (POLYESTER SP-181, manufactured by The Nippon Synthetic Chemical Industry Co., Ltd.) and a TDI (tolylene diisocyanate)-based isocyanate (2,4-tolylene diisocyanate) were mixed at a resin solid content ratio of 10 : 2, and methyl ethyl ketone was added as a solvent thereto. Further, 10 mass% of glycol dimercaptoacetate (manufactured by Wako Pure Chemical Industries, Ltd.) was prepared as the corrosion inhibitor, and was mixed therewith. One surface of the polyester film was coated with the resultant mixture by a gravure coating method, to form an anchor layer (anticorrosion layer) of 100 nm in thickness.

A silver film of 10 nm was then formed on the anchor layer by a vapor deposition method, to form a reflection layer 4.

An anticorrosion layer 5 was formed on the reflection layer 4 in the same manner as above, except that Tinuvin 234 (manufactured by Ciba Japan K. K.) was used instead of the glycol dimercaptoacetate used in the anchor layer. The upper surface of the anticorrosion layer 5 was coated with a 5-µm thick ultraviolet absorption polymer "NEWCOAT UVA-204W" (manufactured by Shin-Nakamura Chemical Co., Ltd.) by a gravure coating method, to form an ultraviolet absorption layer.

The upper surface of the ultraviolet absorption layer was then coated with a 5-µm thick adhesive agent TBS-730 (manufactured by Dainippon Ink and Chemicals, Inc.) by a gravure coating method, to form a bonding layer 6. A 75-µm thick acrylic film "SUMIPEX TECHNOLLOY S001G" (manufactured by Sumitomo Chemical Co., Ltd.) containing an ultraviolet absorber was bonded onto the bonding layer 6, to form an acrylic layer 7.

The surface of the acrylic film on the opposite side from the surface in contact with the bonding layer 6 was subjected to a surface treatment through 10-kW corona discharge, with the conveyance speed being 20 m/min and the distance between the film surface and the corona discharge surface being 2 mm.

The intermediate layer coating solution No. 1 having 5 mass% of PVA-403 (manufactured by Kuraray Co., Ltd.) dissolved in water was applied onto the acrylic layer 7, followed by 2-minute drying at 80°C, to form an intermediate layer 8. The thickness of this intermediate layer 8 after the drying was 0.5 µm.

An acrylic silicone thermosetting resin, SARCoat NP-720 (a mixed solution of 30 mass% of methanol and 1-propanol: manufactured by Doken Co., Ltd.), was applied onto the intermediate layer 8, followed by 90-second drying at 80°C and a 48-hour heat treatment at 45°C, to form a protection layer 9. In this manner, a heat shielding film 1 (HS-1) was manufactured. The thickness of this protection layer 9 after the drying was 3 µm.

### (Heat Shielding Film 2: Manufacturing of HS-2)

Instead of the intermediate layer of the above described heat shielding film (HS-1), an intermediate layer 8 was formed by applying the intermediate layer coating solution No. 2 (used in the film mirror FM2) having 5 mass% of EM32 (manufactured by Cemedine Co., Ltd.) dispersed in water onto the acrylic layer 7, followed by 2-minute drying at 80°C. Other than that, a heat shielding film 2 (HS-2) was manufactured in the same manner as the heat shielding film (HS-1). The thickness of this intermediate layer 8 after the drying was 0.5 µm.

### (Heat Shielding Film 3: Manufacturing of HS-3)

Instead of the intermediate layer of the above described heat shielding film (HS-1), an intermediate layer 8 was formed by applying the intermediate layer coating solution No. 8 (used in the film mirror FM8) onto the acrylic layer 7, followed by 2-minute drying at 80°C. Other than that, a heat shielding film 3 (HS-3) was manufactured in the same manner as the heat shielding film (HS-1). The thickness of this intermediate layer 8 after the drying was 0.5 µm.

### (Heat Shielding Film 4: Manufacturing of HS-4)

Instead of the intermediate layer of the above described heat shielding film (HS-1), an intermediate layer 8 was formed by applying the intermediate layer coating solution No. 17 (used in the film mirror FM17) onto the acrylic layer 7, followed by 2-minute drying at 80°C. Other than that, a heat shielding film 4 (HS-4) was manufactured in the same manner as the heat shielding film (HS-1). The thickness of this intermediate layer 8 after the drying was 0.5 µm.

### (Heat Shielding Film 5: Manufacturing of HS-5)

Instead of the intermediate layer of the above described heat shielding film (HS-1), an intermediate layer 8 was formed by applying the intermediate layer coating solution No. 18 (used in the film mirror FM18) onto the acrylic layer 7, followed by 2-minute drying at 80°C. Other than that, a heat shielding film 5 (HS-5) was manufactured in the same manner as the heat shielding film (HS-1). The thickness of this intermediate layer 8 after the drying was 0.5 µm.

### (Heat Shielding Film 6: Manufacturing of HS-6)

The acrylic layer 7 was not subjected to the surface treatment through corona discharge in the manufacturing of the heat shielding film (HS-1), and an intermediate layer 8 was formed by applying the intermediate layer coating solution No. 1 (used in the film mirror FM1) onto the acrylic layer 7, followed by 2-minute drying at 80°C. Other than that, a heat shielding film 6 (HS-6) was manufactured in the same manner as the heat shielding film (HS-1). The thickness of this intermediate layer 8 after the drying was 0.5 µm.

### (Heat Shielding Film 7: Manufacturing of HS-7)

The intermediate layer was not formed in the manufacturing of the above described heat shielding film (HS-6), and an acrylic silicone thermosetting resin, SARCoat NP-720 (a mixed solution of 30 mass% of methanol and 1-propanol: manufactured by Doken Co., Ltd.), was applied onto the acrylic layer 7, followed by 90-second drying at 80°C and a 48-hour heat treatment at 45°C. In this manner, a protection layer 9 was formed, and a heat shielding film 7 (HS-7) was manufactured. The thickness of this protection layer 9 after the drying was 3 µm.

### (Heat Shielding Film 8: Manufacturing of HS-8)

The protection layer 9 was not formed in the manufacturing of the above described heat shielding film (HS-6), and a heat shielding film 8 (HS-8) having the intermediate layer 8 as the outermost surface was manufactured.

### (Evaluations of the Heat Shielding Films)

Transmittance measurement, sandblast damage resistance evaluations, evaluations with respect to weatherability against ultraviolet irradiation, sand adhesion evaluations, evaluations with respect to adhesiveness after ultraviolet irradiation were conducted on the above manufactured heat shielding films (HS-1 to HS-8) in the manners described below.

### (Initial Transmittance Measurement)

Transmittances of the manufactured heat shielding films (HS-1 to HS-8) were measured.

The device used there was prepared by attaching an auxiliary integrating sphere reflecting device to a spectrophotometer UV265, manufactured by Shimadzu Corporation. Transmittances were measured in the range of 380 nm to 780 nm, and the mean transmittance was set as the transmittance.

Also, a 300-hour ultraviolet irradiation process at 63°C was performed on the manufactured heat shielding films (HS-1 to HS-7) with the use of Eye Super UV Tester, manufactured by Iwasaki Electric Co., Ltd., and the transmittances of the heat shielding films measured after the ultraviolet irradiation were set as the transmittances after UV irradiation. The transmittances measured immediately after the manufacturing of the film mirrors were set as the initial transmittances.

### (Weatherability Evaluations)

A 1000-hour ultraviolet irradiation process at 63°C was performed on the manufactured heat shielding films with the use of Eye Super UV Tester, manufactured by Iwasaki Electric Co., Ltd. Transmittances were then measured, and transmittance differences between before and after the ultraviolet irradiation were calculated. Samples with smaller transmittance differences between before and after the ultraviolet irradiation have excellent weatherability.

### (Sandblast Damage Resistance Evaluations)

Each of the manufactured heat shielding films (HS-1 to HS-7) was positioned at an angle of inclination of 60 degrees in a predetermined position. Glass beads #60 (GBL #60 compliant with JIS Z 8901) were blown toward the protection layer surfaces (or the intermediate layer surfaces) of the heat shielding films at a wind speed of 20 meters per second for five minutes (sandblast test), and transmittances of the samples (heat shielding films) were measured after the sand was removed from the surfaces with ethanol. Transmittance differences in the range of 380 to 780 nm between before and after the sandblast test were evaluated. Samples with smaller transmittance differences between before and after the sandblast test have higher resistances to damage.

### (Sand Adhesion Measurement)

After three kinds of particles for JIS test specified in JIS Z 8901 were heated in an oven at 150°C for two hours and were then cooled in a desiccator, 1000 g of the particles were sprinkled at a rate of 100 g per minute from 60 cm above onto the samples tilted at 60 degrees. With the sand remaining adhering to the samples, transmittances at 85 degrees were measured with a glossmeter GM-268 (manufactured by Konica Minolta, Inc.), and transmittance differences between before and after the sand adhesion were calculated. Samples that have smaller transmittance differences between before and after the sand adhesion have less sand adhering thereto, and have excellent properties.

### (Adhesiveness Evaluations)

A simulation of a grid tape test specified in former JIS K 5400 was performed on each manufactured heat shielding films by forming 100 squares with slits in a grid pattern and evaluating adhesiveness under the conditions described below. A sample that has a larger number of remaining squares out of the 100 squares has excellent adhesiveness.

After a 1000-hour ultraviolet irradiation process at 63°C was performed on the manufactured film mirror with the use of Eye Super UV Tester, manufactured by Iwasaki Electric Co., Ltd., a tape test was conducted, and evaluation was made when the tape was detached for the fifth time.

The results of the evaluations of those heat shielding films (HS-1 to HS-8) are shown in Table 4.

**(Table 4)**

| | Name | Intermediate layer | Intermediate layer thickness [µm] | Corona treatment | Polyisocyanate | Conductive fine particles | Protection layer thickness [µm] | Initial transmittance | Sandblast evaluation ΔTransmittance | Weatherability evaluation ΔTransmittances | Sand adhesion evaluatlon ΔTransmittance | evaluation |
|---|---|---|---|---|---|---|---|---|---|---|---|---|
| Example 18 | HS-1 | PVA-403 | 0.5 | Conducted | - | - | 3 | 40.0% | -0.5 | -2.0 | -1.0 | 100 |
| Example 19 | HS-2 | EM32 | 0.5 | Conducted | - | - | 3 | 40.0% | -0.5 | -2.0 | -1.0 | 100 |
| Example 20 | HS-3 | PVA-403 | 0.5 | Conducted | Duranate WT20-100 | - | 3 | 40.0% | -0.5 | -1.0 | -1.0 | 100 |
| Example 21 | HS-4 | PVA-403 | 0.5 | Conducted | - | CELNAX CX-Z330H | 3 | 40.0% | -0.5 | -0.5 | -0.5 | 100 |
| Example 22 | HS-5 | PVA-403 | 0.5 | Conducted | Duranate WT20-100 | CELNAX CX-Z330H | 3 | 40.0% | -0.5 | -0.5 | -0.5 | 100 |
| Example 23 | HS-6 | PVA-403 | 0.5 | Not conducted | - | - | 3 | 40.0% | -0.5 | -2.5 | -1.0 | 30 |
| Comparative Example 3 | HS-7 | - | 0 | Not conducted | - | - | 3 | 40.0% | -3.0 | -5.0 | -3.0 | 0 |
| Comparative Example 4 | HS-8 | PVA-403 | 0.5 | Not conducted | - | - | - | 40.0% | -6.0 | -6.0 | -12.0 | 0 |

As can be seen the results shown in Table 4, the heat shielding films (HS-1 to HS-6) containing at least one of polyvinyl alcohol resin, polyvinyl acetate, cellulose, and water glass in the intermediate layers 8 have small transmittance decreases and high resistances to damage in the sandblast evaluations, and also have excellent light resistance.

Particularly, the heat shielding films (HS-3 and HS-5) containing polyisocyanate (a polysiloxane compound) in the intermediate layers 8 have high resistances to damage.

As described above, according to the present invention, heat shielding films (functional films) that are highly resistant to damage can be obtained.

It should be noted that applications of the present invention are not limited to the above described embodiments, and modifications can be made to them without departing from the scope of the invention.

### Industrial Applicability

As described so far, the present invention is suitable for providing a functional film that is highly resistant to damage, and a method of manufacturing a functional film.

### Reference Signs List

- 1: Metal substrate
- 2: Adhesive layer
- 3: Resin substrate
- 4: Reflection layer
- 5: Anticorrosion layer
- 6: Bonding layer
- 7: Acrylic layer
- 8: Intermediate layer
- 9: Protection layer
- 10: Film mirror
- 20: Reflecting device for solar power generation

## Claims

1. A functional film comprising
an acrylic layer, an intermediate layer, and a protection layer in this order on a resin substrate, the acrylic layer, the intermediate layer, the protection layer being adjacent to one another, the protection layer being located on the outermost surface, wherein
the protection layer contains at least a polysiloxane compound, and
the intermediate layer contains at least one of polyvinyl alcohol resin, polyvinyl acetate, cellulose, and water glass.

2. The functional film according to claim 1, wherein the intermediate layer contains polyisocyanate.

3. The functional film according to claim 1 or 2, wherein the intermediate layer contains conductive fine particles.

4. The functional film according to any of claims 1 to 3, which is a film mirror for solar power generation, the film mirror including a reflection layer having a thickness not smaller than 30 nm and not greater than 200 nm.

5. The functional film according to any of claims 1 to 3, which is a heat shielding film including a reflection layer having a thickness not smaller than 0.1 nm and not greater than 50 nm.

6. A method of manufacturing a functional film including an acrylic layer, an intermediate layer, and a protection layer on a resin substrate,
the method comprising:
forming the acrylic layer on an upper surface side of the resin substrate;
performing a corona treatment on an upper surface of the acrylic layer;
forming the intermediate layer on the acrylic layer, the intermediate layer containing at least one of polyvinyl alcohol resin, polyvinyl acetate, cellulose, and water glass; and
forming the protection layer on the intermediate layer, the protection layer containing at least a polysiloxane compound.

7. The method according to claim 6, further comprising
performing a heat treatment to cause interlayer coupling between the acrylic layer and the intermediate layer, and/or interlayer coupling between the intermediate layer and the protection layer.
